# EUROPEAN PATENT SPECIFICATION

(11) **EP 2 819 118 B1**
(45) Date of publication and mention of the grant of the patent: **12.12.2018**
(21) Application number: 13197450.3
(22) Date of filing: 16.12.2013
(51) Int. Cl.: G09G 3/36, G09G 3/20

(54) **Pixel structure and display panel**
Pixelstruktur und Anzeigetafel
Structure de pixels et panneau d'affichage

(30) Priority: 28.06.2013 CN 201310271048
(43) Date of publication of application: 31.12.2014
(73) Proprietor: Shanghai Tianma Micro-electronics Co., Ltd., Pudong New District Shanghai 201201 (CN); Tianma Micro-Electronics Co., Ltd., Shenzhen Guangdong 518052 (CN)
(72) Inventor: YANG, Kang, Shanghai 201201 (CN); MA, Jun, Shanghai 201201 (CN); WU, Tianyi, Shanghai201201 (CN); CHEN, Hao, Shanghai 201201 (CN)
(74) Representative: Epping - Hermann - Fischer

(56) References cited:
- EP-A1- 2 498 126
- WO-A1-2007/129425
- US-A1- 2005 184 980
- US-A1- 2011 304 660

## Description

### CROSS-REFERENCE TO RELATED APPLICATIONS

### FIELD OF THE DISCLOSURE

The present disclosure generally relates to display field, and more particularly, to a pixel structure and a display panel including the pixel structure.

### BACKGROUND OF THE DISCLOSURE

EP 2498126 A1 discloses a liquid crystal display device. The liquid crystal display device has pixels arranged in columns and row to form a matrix pattern, and includes an active-matrix substrate, a counter substrate, a liquid crystal layer and a signal line driver. The pixels include m kinds of (where m is an even number and m≥4) pixels that display different colors and that are repeatedly arranged in the same order in the row direction. Grayscale voltages of the same polarity are supplied to two of the signal lines of the active-matrix substrate, which are adjacent with one of the m kind of pixels interposed between them. The active-matrix substrate further includes an additional signal line, which is arranged between the two signal line to run in the column direction and which is supplied with a grayscale voltage, of which the polarity is opposite to the grayscale voltage supplied to the two signal lines.

WO 2007/129425 A1 discloses a liquid crystal display device in which one pixel is formed by four or more sub pixels and dot-reversed display is performed. In a source driver having individual drivers, an adjacent individual driver outputs a signal of a different polarity. On a liquid crystal panel, pixel each formed by four sub pixels: red, green, blue, and white arranged in the same order are arranged on a plane. A signal line is arranged in each column of the pixels. The individual drivers are connected to the signal lines by wires. However, for every five individual drivers, there is a wire which is not connected to the signal lines. Thus, it is possible to reduce the horizontal stripes generated when only one-color sub pixels are displayed and improve the display quality of the liquid crystal device.

US 2005/0184980 A1 discloses a method for liquid crystal display device. An object is to prevent a defective indication caused by a reverse twisted domain generated from the dummy pixel region which is provided in the periphery of a display pixel region. By setting a signal voltage to be applied to the pixels of the dummy pixel region to be lower than the maximum value of a video signal voltage which is applied to the display pixel region and also setting it to be in a level by which a defective indication is not caused due to a traverse electric field between the neighboring dummy pixel region and the display pixel region, generation of the reverse twisted domain within the dummy pixel region can be suppressed. Thereby, the defective indication caused by the reverse twist can be prevented.

US 2011/0304660 A1 discloses a display device driving method and a display device. An exemplary display device driving method is applied to a display device. The display device includes a pixel array and a data driving circuit. The pixel array has first through fourth pixels. Each of the first through fourth pixels includes first through fourth sub-pixels. In the display device driving method, each of the first through fourth pixels is provided with a data signal. At least one colored sub-pixel is enabled to display a second gray level in turns in multiple frames of a same frequency period, and the remained sub-pixels are enabled to display a first gray level smaller than the second gray level.

In conventional color display panels, a display unit, such as a pixel, generally includes three sub-pixels of different colors: red R, green G and blue B. The color and brightness a pixel displays may depend on the ratio of the three sub-pixels of different colors in the pixel. Therefore, the above color display panel may be called a RGB display panel. However, in the RGB display panel, the brightness of a pixel generally only depends on an average value of brightness of sub-pixels, resulting in a low brightness and a high power consumption of the RGB display panel.

To solve the above problems, a RGBW pixel structure was provided in related art. The RGBW pixel structure is an array including a plurality of same pixel cells. A pixel cell includes four sub-pixels of different colors: red R, green G, blue B and white W.

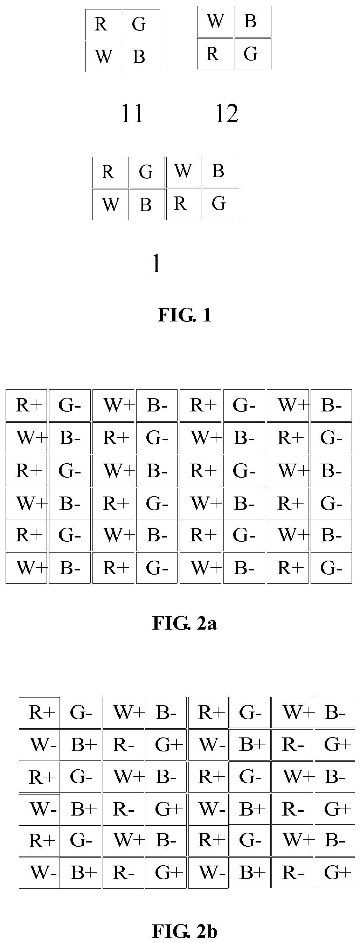

Referring to FIG. 1, FIG. 1 schematically illustrates structures of a first sub-pixel cell 11 and a second sub-pixel cell 12 according to one embodiment. The first sub-pixel cell 11 and the second sub-pixel cell 12 constitute a pixel cell 1. A plurality of pixel cells which are arranged repeatedly in an array form a pixel structure.

Referring to FIG. 2a, FIG. 2a schematically illustrates a distribution diagram of sub-pixel polarities in a one-column inversion drive mode in related art. In such a drive mode, sub-pixels with a same color may have a same polarity. Red sub-pixels R and white sub-pixels W have a positive polarity, while green sub-pixels G and blue sub-pixels B have a negative polarity, which may result in strong flicker in image display and bad display quality. Referring to FIG. 2b, FIG. 2b schematically illustrates a distribution diagram of sub-pixel polarities in one-dot inversion drive mode in related art. In this manner, the problem that sub-pixels with a same color in a pixel cell have a same polarity may be avoided, while a serious horizontal crosstalk may be generated.

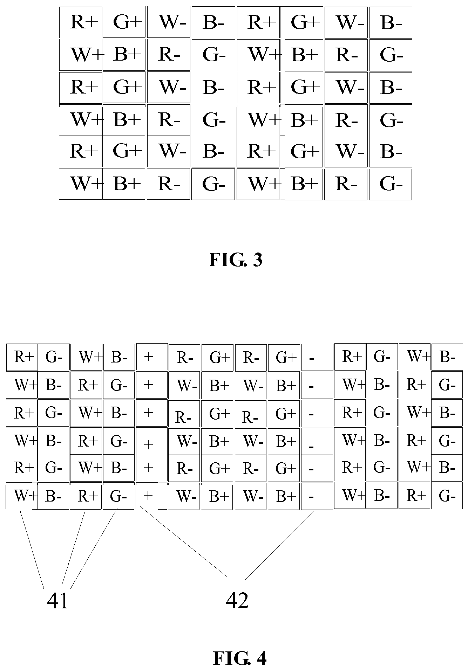

Referring FIG. 3, FIG. 3 schematically illustrates a distribution diagram of sub-pixel polarities in a two-column inversion drive mode in related art. In this manner, a serious horizontal crosstalk may be generated as well, which affects the display quality.

### SUMMARY

In embodiments of the present disclosure, a pixel structure and a display panel are provided.

The pixel structure may include: red sub-pixels, white sub-pixels, blue sub-pixels and green sub-pixels, which are arranged to form first sub-pixel cells and second sub-pixel cells. The first and second sub-pixel cells may be arranged to form pixel cells. The pixel cells may be arranged up and down repeatedly to form pixel array cells. The pixel array cells may be arranged left and right repeatedly to form pixel arrays. A supplement pixel array may be disposed between the pixel cells according to a preset mode, the supplement pixel array is adapted for array inversion supplement in the pixel structure, the supplement pixel array comprises one or more columns of sub-pixels adapted to not display in the pixel structure. The preset mode comprises setting sub-pixels with a same color in a same row in a same signal frame with different polarities, and setting a sub-pixel in the supplement pixel array with a polarity different from that of an adjacent sub-pixel in a same row of the pixel cell.

The display panel may include the above pixel structure.

In embodiments of the present disclosure, supplement pixel arrays are inserted between pixel arrays, thereby flicker and horizontal crosstalk of images may be reduced and the image display quality may be improved.

Specifically, the supplement pixel arrays are inserted between the pixel arrays so that the sub-pixels with a same color in a same row in a same signal frame may not have a same polarity, thereby flicker and horizontal crosstalk of images may be reduced.

### BRIEF DESCRIPTION OF THE DRAWINGS

In order to clarify the objects, characteristics and advantages of the disclosure and related art, embodiments of present disclosure will be described in detail in conjunction with accompanying drawings of both the disclosure and related art. Obviously, the drawings are just examples and do not limit the scope of the disclosure, and other drawings may be obtained by a person skilled in the art based on these drawings without creative work.
FIG. 1 schematically illustrates structures of a first sub-pixel cell, a second sub-pixel cell and a RGBW pixel cell according to one embodiment of the present disclosure;
FIG. 2a schematically illustrates a distribution diagram of sub-pixel polarities in a one-column inversion drive mode in related art;
FIG. 2b schematically illustrates a distribution diagram of sub-pixel polarities in a one-dot inversion drive mode in related art;
FIG. 3 schematically illustrates a distribution diagram of sub-pixel polarities in a two-column inversion drive mode in related art;
FIG. 4 schematically illustrates a distribution diagram of sub-pixel polarities after inserting a supplement pixel array when a pixel electrode is driven with one-column inversion mode according to a first embodiment of the present disclosure;
FIG. 5 schematically illustrates a distribution diagram of sub-pixel polarities after inserting a supplement pixel array when a pixel electrode is driven with one-column inversion mode according to a second embodiment of the present disclosure;
FIG. 6 schematically illustrates a distribution diagram of sub-pixel polarities after inserting a supplement pixel array when a pixel electrode is driven with one-column inversion mode according to a third embodiment of the present disclosure;
FIG. 7 schematically illustrates a distribution diagram of sub-pixel polarities after inserting a supplement pixel array when a pixel electrode is driven with one-column inversion mode according to a fourth embodiment of the present disclosure;
FIG. 8 schematically illustrates a distribution diagram of sub-pixel polarities after inserting a supplement pixel array when a pixel electrode is driven with one-dot inversion mode according to one embodiment of the present disclosure;
FIG. 9 schematically illustrates a distribution diagram of sub-pixel polarities after inserting a supplement pixel array when a pixel electrode is driven with a two-dot inversion mode according to one embodiment of the present disclosure; and
FIG. 10 schematically illustrates a distribution diagram of sub-pixel polarities after inserting a supplement pixel array when a pixel electrode is driven with a four-dot inversion mode according to one embodiment of the present disclosure.

### DETAILED DESCRIPTION OF THE DISCLOSURE

In order to clarify the objects, characteristics and advantages of the disclosure, embodiments of present disclosure will be described in detail in conjunction with accompanying drawings. Without departing from the scope of the present invented technology scheme, whatever simple modification and equivalent variation belong to the protection range of the present invented technology scheme.

Referring to FIG. 1, in some embodiments, a red sub-pixel R, a green sub-pixel G, a blue sub-pixel B and a white sub-pixel W are arranged in a 2-by-2 matrix to form a first sub-pixel cell 11 and a second sub-pixel cell 12. And the first sub-pixel cell 11 and the second sub-pixel cell 12 are arranged to form a pixel cell 1. The pixel cell 1 may be arranged up and down repeatedly to form a pixel array cell and the pixel array cell may be arranged left and right repeatedly to form a pixel array. It should be noted that, the first sub-pixel cell 11 and the second sub-pixel cell 12 may be formed in the manner shown in FIG. 1 or otherwise arranged, which should not limit the scope of the present disclosure.

In some embodiments, from left to right, a first row of a first sub-pixel cell 11 includes a red sub-pixel R and a green sub-pixel G, a second row of the first sub-pixel cell 11 includes a white sub-pixel W and a blue sub-pixel B, a first row of a second sub-pixel cell 12 includes a blue sub-pixel B and a white sub-pixel W, and a second row of the second sub-pixel cell 12 includes a red sub-pixel R and a green sub-pixel G.

In some embodiments, from left to right, a first row of a first sub-pixel cell 11 includes a red sub-pixel R and a green sub-pixel G, a second row of the first sub-pixel cell 11 includes a white sub-pixel W and a blue sub-pixel B, a first row of a second sub-pixel cell 12 includes a blue sub-pixel B and a white sub-pixel W, and a second row of the second sub-pixel cell 12 includes a green sub-pixel G and a red sub-pixel R.

In some embodiments, from left to right, a first row of a first sub-pixel cell 11 includes a red sub-pixel R and a green sub-pixel G, a second row of the first sub-pixel cell 11 includes a white sub-pixel W and a blue sub-pixel B, a first row of a second sub-pixel cell 12 includes a white sub-pixel W and a blue sub-pixel B, and a second row of the second sub-pixel cell 12 includes a green sub-pixel G and a red sub-pixel R.

In some embodiments, a first sub-pixel cell 11 and a second sub-pixel cell 12 may be a 2-by-2 matrix including a red sub-pixel R, a green sub-pixel G, a blue sub-pixel B and a white sub-pixel W arranged in a certain form. In some embodiments, a first sub-pixel cell 11 and a second sub-pixel cell 12 may be matrixes including a red sub-pixel R, a green sub-pixel G, a blue sub-pixel B and a white sub-pixel W arranged in other forms, for example, a red sub-pixel R, a green sub-pixel G, a blue sub-pixel B and a white sub-pixel W arranged to form a 1-by-4 matrix.

Referring to FIG. 4, FIG. 4 schematically illustrates a distribution diagram of sub-pixel polarities after inserting a supplement pixel array when a pixel electrode is driven with one-column inversion mode according to a first embodiment of the present disclosure. In the embodiment, a pixel structure includes a pixel array formed by arranging pixel array cells 41 left and right repeatedly, and supplement pixel arrays 42 inserted between the pixel array cells 41. A supplement pixel array 42 may be inserted between two adjacent pixel array cells 41 so that sub-pixels with a same color in a same row in a same frame may not have a same polarity, that is, some of the sub-pixels with a same color in a same row in a same frame are driven by a positive voltage and some are driven by a negative voltage. In some embodiments, the supplement pixel arrays 42 may be adapted to invert sub-pixel polarities and not adapted to display in the pixel structure. The polarity of a sub-pixel in the supplement pixel arrays 42 may depend on polarities of adjacent sub-pixels and the pixel drive mode.

In some embodiments, odd supplement pixel arrays 42 may be inserted between two adjacent pixel array cells 41, which also belong to the protection range of the present disclosure.

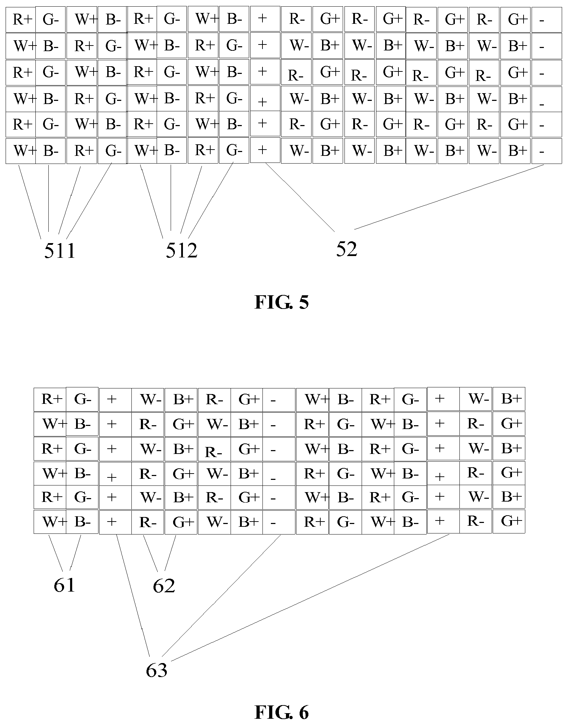

Referring to FIG. 5, FIG. 5 schematically illustrates a distribution diagram of sub-pixels polarities after inserting a supplement pixel array when a pixel electrode is driven with one-column inversion mode according to a second embodiment of the present disclosure. In the embodiment, a pixel structure may include pixel array cells 511, pixel array cells 512, and supplement pixel arrays 52. Each of the supplement pixel arrays 52 is disposed between two adjacent groups of a pixel array cell 511 and a pixel array cell 512. That is, a cycle of polarity inversion of the whole pixel structure is 16 sub-pixel columns. In the above first embodiment, left and right signals in a pixel structure may be asymmetric after inserting supplement pixel arrays between pixel array cells, thus, an inversion function of drive IC signals can not be used. The second embodiment may solve the problem and may be used more widely.

Referring to FIG. 6, FIG. 6 schematically illustrates a distribution diagram of sub-pixel polarities after inserting a supplement pixel array when a pixel electrode is driven with one-column inversion mode according to a third embodiment of the present disclosure. In the embodiment, a pixel structure may include first sub-pixel cell arrays 61 formed by arranging first sub-pixel cells up and down repeatedly, second sub-pixel cell arrays 62 formed by arranging second sub-pixel cells up and down repeatedly, and supplement pixel arrays 63. One of the first sub-pixel cell arrays 61 and one of the second sub-pixel cell arrays 62 form a pixel array cell, and one of the supplement pixel arrays 63 is disposed between the first sub-pixel cell array 61 and the second sub-pixel cell array 62 in a pixel array cell. In the embodiment, a cycle of polarity inversion of the whole pixel structure may be 8 sub-pixel columns.

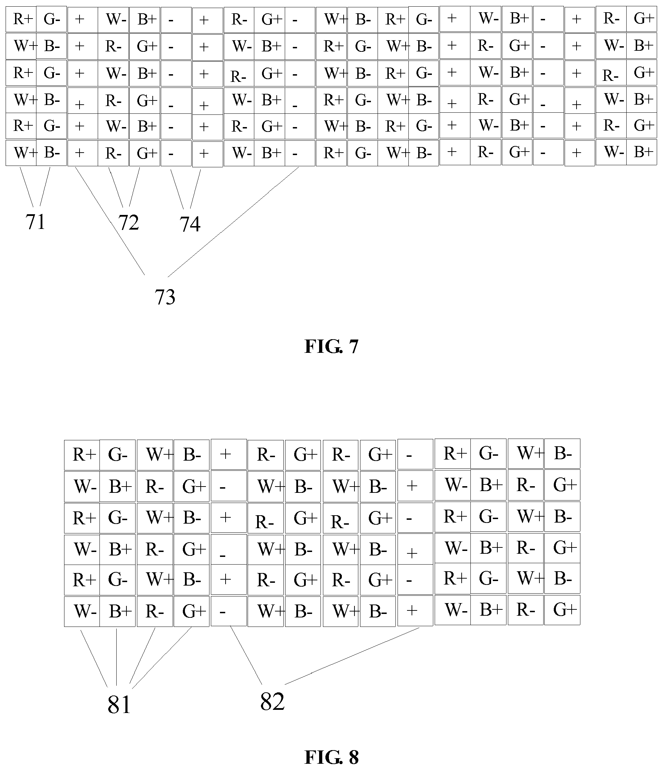

Referring to FIG. 7, FIG. 7 schematically illustrates a distribution diagram of sub-pixel polarities after inserting a supplement pixel array when a pixel electrode is driven with one-column inversion mode according to a fourth embodiment of the present disclosure. In the embodiment, a pixel structure may include first sub-pixel cell arrays 71 formed by arranging first sub-pixel cells up and down repeatedly, second sub-pixel cell arrays 72 formed by arranging second sub-pixel cells up and down repeatedly, first supplement pixel array cells 73 and second supplement pixel array cells 74. Each of the first supplement pixel array cells 73 is disposed between one of the first sub-pixel cell arrays 71 and one of the second sub-pixel cell arrays 72. One first sub-pixel cell array 71 and one second sub-pixel cell array 72 which are adjacent to each other, form a pixel array cell, and one of the second supplement pixel array cells 74 is disposed between two adjacent pixel array cells. Each of the second supplement pixel array cells 74 may include even supplement pixel arrays.

When a drive IC has surplus signal channels therein, the fourth embodiment may be employed so as to ensure that drive signals are symmetric in a pixel structure.

Referring to FIG. 8, FIG. 8 schematically illustrates a distribution diagram of sub-pixel polarities after inserting a supplement pixel array when a pixel electrode is driven with one-dot inversion mode according to one embodiment of the present disclosure. In the embodiment, a pixel structure may include pixel array cells 81 and supplement pixel arrays 82. The supplement pixel arrays 82 are inserted between the pixel array cells 81 and adapted for sub-pixel polarity inversion supplement. In the embodiment, the drive mode of the pixel structure may be one-dot inversion.

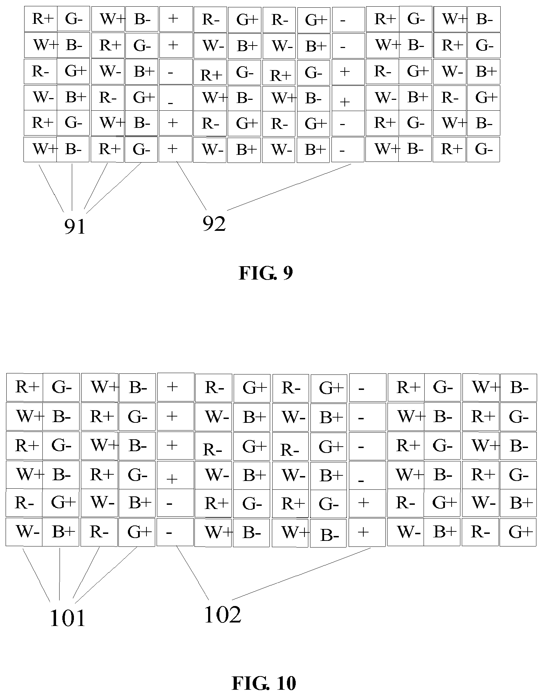

Referring to FIG. 9, FIG. 9 schematically illustrates a distribution diagram of sub-pixel polarities after inserting a supplement pixel array when a pixel electrode is driven with a two-dot inversion method according to one embodiment of the present disclosure. In the embodiment, a pixel structure may include pixel array cells 91 and supplement pixel arrays 92. The supplement pixel arrays 92 are inserted between the pixel array cells 91 and adapted for sub-pixel polarity inversion supplement. In the embodiment, the drive mode of the pixel structure may be two-dot inversion.

Referring to FIG. 10, FIG. 10 schematically illustrates a distribution diagram of sub-pixel polarities after inserting a supplement pixel array when a pixel electrode is driven with a four-dot inversion method according to one embodiment of the present disclosure. In the embodiment, a pixel structure may include pixel array cells 101 and supplement pixel arrays 102. The supplement pixel arrays 102 may be inserted between the pixel array cells 101 and adapted for sub-pixel polarity inversion supplement. In the embodiment, the drive mode of the pixel structure may be four-dot inversion.

In embodiments of the present disclosure, two sub-pixels constitute a main pixel in a pixel structure of RGBW. In conventional pixel structures of RGB, three sub-pixels constitute a main pixel. Therefore, when an IC, which is adapted to drive a pixel structure of RGB, is used to drive a pixel structure of RGBW, signal channels may be surplus. Supplement pixel arrays may be set based on the surplus signal channels. In some embodiments, supplement pixel arrays may be set according to practical requirements of polarity inversion of a pixel structure of RGBW and a drive IC may be further designed correspondingly.

In embodiments of the present disclosure, a supplement pixel array may be adapted for sub-pixel polarity inversion supplement and not adapted for image display.

Embodiments of the present disclosure may have following advantages.

Supplement pixel arrays are disposed between pixel arrays so that sub-pixels with a same color in a same row in a same signal frame may not have a same polarity, thereby reducing flicker and horizontal crosstalk of images and improving the display quality.

Structural features described above are disclosed as exemplary embodiments only. Units which are described as separated components may or may not be separated physically. Components used for display may or may not be physical units, that is, they may be disposed on a same place or distributed in a plurality of network cells. The purpose of the present disclosure may be realized by selecting some or all of the modules according to practical requirements.

## Claims

1. A display panel, comprising a pixel structure, the pixel structure comprising:
red sub-pixels, white sub-pixels, blue sub-pixels and green sub-pixels, which are arranged to form first sub-pixel cells (11) and second sub-pixel cells (12),
wherein the first and second sub-pixel cells are arranged to form pixel cells (1), the pixel cells (1) are arranged up and down repeatedly to form pixel array cells (41, 511, 512, 81, 91, 101), the pixel array cells (41, 511, 512, 81, 91, 101) are arranged left and right repeatedly to form pixel arrays,
**characterized by**:
the pixel structure further comprises a supplement pixel array (42, 52, 63, 82, 92, 102) disposed between the pixel cells, wherein the supplement pixel array (42, 52, 63, 82, 92, 102) is adapted for polarity inversion supplement in the pixel structure, and the supplement pixel array (42, 52, 63, 82, 92, 102) consists of one or more columns of sub-pixels adapted to not display in the pixel structure, and
the display panel further comprises a drive integrated circuit adapted to set sub-pixels with a same color in a same row in a same signal frame, belonging to the pixel cells, with different polarities, and to set a sub-pixel in the supplement pixel array with a polarity different from that of a directly adjacent sub-pixel belonging to the pixel cells in the same row in the same signal frame.

2. The display panel according to claim 1, wherein the supplement pixel array (42, 52, 82, 92, 102) is disposed between two adjacent pixel array cells (41, 81, 91, 101) or between every two pixel array cells (511, 512).

3. The display panel according to claim 1, wherein the supplement pixel array (63) is disposed between a pixel array (61) formed by the first sub-pixel cells (11) and a pixel array (62) formed by the second sub-pixel cells (12).

4. The display panel according to claim 1, wherein the supplement pixel array comprises a first supplement pixel array (73) and a second supplement pixel array (74), wherein the first supplement pixel array (73) is disposed between a first sub-pixel cell array (71) formed by arranging first sub-pixel cells (11) up and down repeatedly and a second sub-pixel cell array (72) formed by arranging second sub-pixel cells (12) up and down repeatedly, the second supplement pixel array cell (74) is disposed between two adjacent pixel array cells, and the second supplement pixel array (74) comprises even supplement pixel arrays.

5. The display panel according to any one of claims 1 to 4, wherein the red sub-pixels R, the green sub-pixels G, the blue sub-pixels B and the white sub-pixels W are arranged in 2-by-2 matrix to form the first sub-pixel cells (11) and the second sub-pixel cells (12).

6. The display panel according to claim 5, wherein a drive mode of the pixel structure is column inversion mode.

7. The display panel according to claim 5, wherein a drive mode of the pixel structure is dot inversion mode.

8. The display panel according to claim 7, wherein the drive mode of the pixel structure comprises one-dot inversion mode, two-dot inversion mode and four-dot inversion mode.

## Patentansprüche

1. Anzeigetafel, eine Pixelstruktur aufweisend, wobei die Pixelstruktur umfasst:
rote Teilpixel, weiße Teilpixel, blaue Teilpixel und grüne Teilpixel, die zu ersten Teilpixelzellen (11) und zweiten Teilpixelzellen (12) angeordnet sind,
wobei die ersten und zweiten Teilpixelzellen zu Pixelzellen (1) angeordnet sind, die Pixelzellen (1) in sich wiederholender Weise in der nach oben und unten führenden Richtung angeordnet sind, um Pixelmatrixzellen (41, 511, 512, 81, 91, 101) zu bilden, und die Pixelmatrixzellen (41, 511, 512, 81, 91, 101) in sich wiederholender Weise in der nach links und rechts führenden Richtung angeordnet sind, um Pixelmatrizen zu bilden,
**dadurch gekennzeichnet, dass**:
die Pixelstruktur ferner eine Ergänzungspixelmatrix (42, 52, 63, 82, 92, 102) umfasst, die zwischen den Pixelzellen angeordnet ist, wobei die Ergänzungspixelmatrix (42, 52, 63, 82, 92, 102) für eine Polaritätsinversionsergänzung in der Pixelstruktur angepasst ist, und die Ergänzungspixelmatrix (42, 52, 63, 82, 92, 102) aus einer oder mehreren Spalten von Teilpixeln besteht, die dazu angepasst sind, in der Pixelstruktur nicht angezeigt zu werden, und
die Anzeigetafel ferner eine integrierte Ansteuerungsschaltung umfasst, die dazu angepasst ist, Teilpixel mit derselben Farbe in derselben Zeile in demselben Signalrahmen, der zu den Pixelzellen gehört, mit unterschiedlichen Polaritäten einzustellen, und ein Teilpixel in der Ergänzungspixelmatrix mit einer Polarität einzustellen, die sich von der eines direkt benachbarten Teilpixels unterscheidet, das zu den Pixelzellen in derselben Zeile in demselben Signalrahmen gehört.

2. Anzeigetafel nach Anspruch 1, wobei die Ergänzungspixelmatrix (42, 52, 82, 92, 102) zwischen zwei benachbarten Pixelmatrixzellen (41, 81, 91, 101) oder zwischen jeweils zwei Pixelmatrixzellen (511, 512) vorgesehen ist.

3. Anzeigetafel nach Anspruch 1, wobei die Ergänzungspixelmatrix (63) zwischen einer Pixelmatrix (61), die durch die ersten Teilpixelzellen (11) gebildet ist, und einer Pixelmatrix (62) vorgesehen ist, die durch die zweiten Teilpixelzellen (12) gebildet ist.

4. Anzeigetafel nach Anspruch 1, wobei die Ergänzungspixelmatrix eine erste Ergänzungspixelmatrix (73) und eine zweite Ergänzungspixelmatrix (74) umfasst, wobei die erste Ergänzungspixelmatrix (73) zwischen einer ersten Teilpixelzellenmatrix (71), die durch wiederholtes Anordnen erster Teilpixelzellen (11) in der nach oben und unten führenden Richtung gebildet ist, und einer zweiten Teilpixelzellenmatrix (72) vorgesehen ist, die durch wiederholtes Anordnen zweiter Teilpixelzellen (12) in der nach oben und unten führenden Richtung gebildet ist, wobei die zweite Ergänzungspixelmatrix (74) zwischen zwei benachbarten Pixelanordnungszellen vorgesehen ist und die zweite Ergänzungspixelmatrix (74) geradzahlige Ergänzungspixelmatrizen umfasst.

5. Anzeigetafel nach einem der Ansprüche 1 bis 4, wobei die roten Teilpixel R, die grünen Teilpixel G, die blauen Teilpixel B und die weißen Teilpixel W in einer 2x2-Matrix angeordnet sind, um die ersten Teilpixelzellen (11) und die zweiten Teilpixelzellen (12) zu bilden.

6. Anzeigetafel nach Anspruch 5, wobei ein Ansteuerungsmodus der Pixelstruktur ein Spalteninversionsmodus ist.

7. Anzeigetafel nach Anspruch 5, wobei ein Ansteuerungsmodus der Pixelstruktur ein Punktinversionsmodus ist.

8. Anzeigetafel nach Anspruch 7, wobei der Ansteuerungsmodus der Pixelstruktur einen Einpunkt-Inversionsmodus, einen Zweipunkt-Inversionsmodus und einen Vierpunkt-Inversionsmodus umfasst.

## Revendications

1. Panneau d'affichage, comprenant une structure de pixels, ladite structure de pixels comprenant :
des sous-pixels rouges, des sous-pixels blancs, des sous-pixels bleus et des sous-pixels verts qui sont agencés de telle sorte à former des premières cellules de sous-pixels (11) et des deuxièmes cellules de sous-pixels (12),
dans lequel les premières et les deuxièmes cellules de sous-pixels sont agencées de telle sorte à former des cellules de pixels (1), lesdites cellules de pixels (1) sont agencées de haut en bas à plusieurs reprises de telle sorte à former des cellules de matrice de pixels (41, 511, 512, 81, 91, 101), lesdites cellules de matrice de pixels (41, 511, 512, 81, 91, 101) sont agencées de gauche à droite à plusieurs reprises pour former des matrices de pixels,
**caractérisé en ce que** :
la structure de pixels comprend en outre une matrice de pixels supplémentaire (42, 52, 63, 82, 92, 102) disposée entre les cellules de pixels, dans lequel la matrice de pixels supplémentaire (42, 52, 63, 82, 92, 102) est adaptée pour un supplément d'inversion de polarité dans la structure de pixels, et la matrice de pixels supplémentaire (42, 52, 63, 82, 92, 102) consiste en une ou plusieurs colonnes de sous-pixels aptes à ne pas s'afficher dans la structure de pixels, et
le panneau d'affichage comprend de plus un circuit intégré de commande apte à mettre des sous-pixels de même couleur sur une même rangée dans une même trame de signal, appartenant aux cellules de pixels, de polarités différentes, et à mettre un sous-pixel dans la matrice de pixels supplémentaire de polarité différente de celle d'un sous-pixel directement adjacent appartenant aux cellules de pixels sur la même rangée de la même trame de signal.

2. Panneau d'affichage selon la revendication 1, dans lequel la matrice de pixels supplémentaire (42, 52, 82, 92, 101) est disposée entre deux cellules de matrice de pixels adjacentes (41, 81, 91, 101) ou toutes les deux cellules de matrice de pixels (511, 512).

3. Panneau d'affichage selon la revendication 1, dans lequel la matrice de pixels supplémentaire (63) est disposée entre une matrice de pixels (61) formée par les premières cellules de sous-pixels (11) et une matrice de pixels (62) formée par les deuxièmes cellules de sous-pixels (12).

4. Panneau d'affichage selon la revendication 1, dans lequel la matrice de pixels supplémentaire comprend une première matrice de pixels supplémentaire (73) et une deuxième matrice de pixels supplémentaire (74), dans lequel la première matrice de pixels supplémentaire (73) est disposée entre une première matrice de cellule de sous-pixels (71) formée par agencement de premières cellules de sous-pixels (11) de haut en bas à plusieurs reprises, et une deuxième matrice de cellule de sous-pixels (72) formée par agencement de deuxièmes cellules de sous-pixels (12) de haut en bas à plusieurs reprises, la deuxième matrice de pixels supplémentaire (74) est disposée entre deux cellules de matrice de pixels adjacentes et la deuxième matrice de pixels supplémentaire (74) comprend des matrices de pixels supplémentaires régulières.

5. Panneau d'affichage selon l'une quelconque des revendications 1 à 4, dans lequel les sous-pixels rouges R, les sous-pixels verts G, les sous-pixels bleus B et les sous-pixels blancs W sont agencés en matrice deux par deux de telle sorte à former les premières cellules de sous-pixels (11) et les deuxièmes cellules de sous-pixels (12).

6. Panneau d'affichage selon la revendication 5, dans lequel un mode de commande de la structure de pixels est le mode en négatif de colonne.

7. Panneau d'affichage selon la revendication 5, dans lequel un mode de commande de la structure de pixels est le mode en négatif de point.

8. Panneau d'affichage selon la revendication 7, dans lequel le mode de commande de la structure de pixels comprend le mode en négatif un point, le mode en négatif deux points et le mode en négatif quatre points.
